**Europäisches Patentamt**

**European Patent Office**

**Office européen des brevets**

(19)

(11) Veröffentlichungsnummer: **0 319 521**
B1

(12) # EUROPÄISCHE PATENTSCHRIFT

(45) Veröffentlichungstag der Patentschrift:
31.10.90

(21) Anmeldenummer: 89101504.2

(22) Anmeldetag: 20.11.86

(60) Veröffentlichungsnummer der früheren Anmeldung
nach Art. 76 EPÜ: 0225515

(51) Int. Cl.⁵: **F16L 33/04, F16L 3/10**

(54) **Rohrschelle.**

(30) Priorität: **07.12.85 DE 3543383**

(43) Veröffentlichungstag der Anmeldung:
**07.06.89 Patentblatt 89/23**

(45) Bekanntmachung des Hinweises auf die Patenterteilung:
**31.10.90 Patentblatt 90/44**

(84) Benannte Vertragsstaaten:
**AT CH DE ES FR GB IT LI NL**

(56) Entgegenhaltungen:
**DE-A- 3 308 459
DE-A- 3 346 423
DE-A- 3 415 294
DE-U- 8 511 234
US-A- 2 941 273**

(73) Patentinhaber: **Müller, Franz, Eichelhäherstrasse 1,
D-6200 Wiesbaden(DE)**

(72) Erfinder: **Müller, Franz, Eichelhäherstrasse 1,
D-6200 Wiesbaden(DE)**

(74) Vertreter: **Jochem, Bernd, Dipl.-Wirtsch.-Ing.,
Patentanwälte Beyer & Jochem
Postfach 17 01 45 Staufenstrasse 36,
D-6000 Frankfurt/Main 1(DE)**

## Beschreibung

Die Erfindung betrifft eine Rohrschelle, bestehend aus einem ringförmigen Bügel mit wenigstens einer Öffnung, die durch eine Spannschraube schließbar ist, deren Fuß auf der einen Seite der Öffnung mit Gewindeeingriff gelagert und deren Kopf auf der anderen Seite der Öffnung durch ein Loch in einem am Bügel angebrachten Flansch hindurchführbar und festlegbar ist.

Eine derartige Rohrschelle ist z. B. in der DE-A-33 08 459 beschrieben. Dort ist ein Langloch im Flansch mit Bezug auf die Mittellängsachse der Rohrschelle radial innen offen. Der Kopf der Spannschraube wird beim Einhaken durch ein ausreichend großes Loch im Bügel hindurchgeführt, welches in das Langloch übergeht. Da beide die Öffnung der einteiligen Schelle begrenzenden Flansche starr am Bügel sitzen, ist selbst bei einer dünnen Rohrschelle die zum Einhaken not wendige Beweglichkeit der Spannschraube nur dann gewährleistet, wenn viel Spiel zwischen dem Rohr und der Rohrschelle vorhanden, also deren Öffnung sehr weit ist. Dies bedingt eine lange Spannschraube und in Anbetracht der großen Zahl der bei einem Bauobjekt normalerweise zu montierenden Rohrschellen eine entsprechend lange Montagezeit zum Anziehen der Spannschrauben un hat außerdem den weiteren Nachteil, daß die im fertig montierten Zustand weit von der geschlossenen Rohrschelle abstehenden Schrauben ggf. störend oder gefährlich sein können.

Bei einer anderen bekannten Rohrschelle gemäß DE-A-33 46 423 ist der Fuß der Spannschraube in eine scheibenförmige Mutter eingeschraubt, die am Bügel der Rohrschelle derart schwenkbar gelagert ist, daß der Schraubenkopf von dem Bügel weg nach außen verschwenkt werden kann, um von dort aus in ein radial außen offenes Langloch in einem Flansch auf der anderen Seite der Öffnung der Rohrschelle eingehakt zu werden. Abgesehen von dem Mangel, daß diese Rohrschelle nur gering belastbar ist, weil bei Verformung das Kopfende der Spannschraube aus dem radial außen offenen Langloch herausrutscht, besteht aus in diesem Fall wieder der Nachteil, daß die Spannschraube verhältnismäßig lang sein muß. Wenn gemäß DE-A-34 36 710 der Schraubenkopf durch ein größeres Loch im Bügel radial von innen in das Langloch eingeschwenkt wird, ist der Übergang vom Bügel zum Langloch geschwächt und man braucht ebenfalls eine verhältnismäßig lange Schraube.

Der Erfindung liegt die Aufgabe zugrunde, eine Rohrschelle der eingangs genannten Art zu schaffen, die sich auch mit einer sehr kurzen Spannschraube gut handhaben und leicht schließen läßt.

Vorstehende Aufgabe wird erfindungsgemäß dadurch gelöst, daß der Kopf 24 der Spannschraube 10 mit Bezug auf deren Mittellängsachse axial durch das Loch 36 im Flansch 20 hindurchführbar ist und durch eine vor dem Spannen zwischen Kopf 24 und Flansch 20 eingeführte, mit einem am einen Ende offenen Langloch 40 ausgebildete Unterlegscheibe 38 gehalten ist.

Die Erfindung bietet den Vorteil, daß die Spannschraube unabhängig von der Stärke der Rohrschelle und vor allem auch bei nur geringem Spiel zwischen Rohr und Rohrschelle, d. h. schmalem und bei Verwendung einer Gummieinlage sogar minimalem Öffnungsspalt, mit wenigen Umdrehungen gespannt und daher sehr kurz sein kann.

Die Erfindung wird nachstehend anhand von in der Zeichnung dargestellten Ausführungsbeispielen näher erläutert. Es ziegen:

Fig. 1 in Seitenansicht und teilweise im Schnitt ein Rohrschelle ohne Gelenk und mit einem so großen Loch in einem Flansch, daß der Kopf der Spannschraube axial hindurchgeführt werden kann;

Fig. 2 u. 3 Längsschnitt und Seitenansicht einer mit einem einseitig offenen Langloch ausgebildeten Unterlegscheibe zur Verwendung bei der Rohrschelle nach Fig. 1;

Fig. 4 eine Draufsicht auf den Flansch mit Durchsteckloch der Rohrschelle nach Fig. 1;

Fig. 5 eine Draufsicht auf die Unterlegscheibe nach Fig. 2 und 3;

Fig. 6 u. 7 ein weiteres Ausführungsbeispiel einer Unterlegscheibe im Längsschnitt und in Draufsicht.

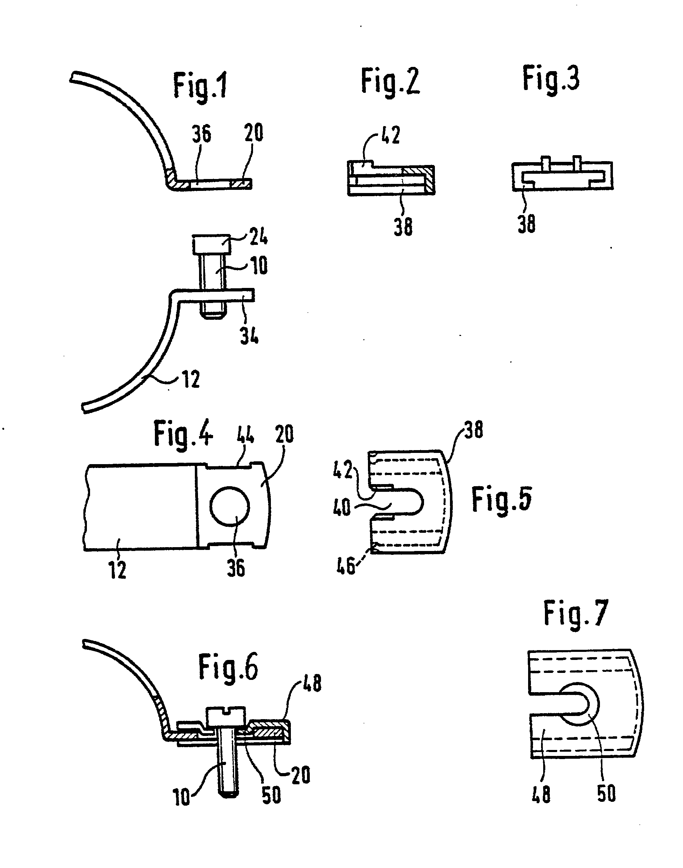

Bei der dargestellten Rohrschelle ist sowohl ein eine Spannschraube 10 tragender Flansch 34 als auch der gegenüberliegende Flansch 20 starr mit dem Bügel 12 verbunden. In dem Flansch 20 befindet sich ein im Querschnitt so großes Loch 36, daß der Schraubenkopf 24 ohne weiteres hindurchgeführt werden kann. Die Spannschraube 10 könnte sich ohne Zuhilfenahme weiterer Maßnahmen dann natürlich auch wieder aus dem Loch 36 zurückziehen. Um dies zu verhindern und eine zuverlässige Spannung zu ermöglichen, ist eine im Beispielsfall besonders gestaltete Unterlegscheibe nach Fig. 2, 3 und 5 vorgesehen. Wesentlich ist, daß diese mit 38 bezeichnete Unterlegscheibe ein an einem Ende offenes Langloch 40 hat, so daß sie nach dem Hindurchführen des Schraubenkopfs 24 durch Loch 36 zwischen den Flansch 20 und den Schraubenkopf 24 geschoben werden kann. Danach erstreckt sich der Schraubenschaft durch das Langloch 40, und der Schraubenkopf 24, welcher breiter ist als das Langloch 40, kann sich nicht mehr durch das Loch 36 zurückziehen.

Die Unterlegscheibe 38 ist neben dem Langloch 40 an dessen offenem Ende mit zwei gegenüberliegenden Höckern 42 geformt, deren Zwischenabstand kleiner ist als der Durchmesser des Schraubenkopfs 24. Die Höcker 42 befinden sich nach dem Festziehen der Spannschraube 10 neben dem Schraubenkopf 24 und verhindern, daß die Unterlegscheibe 38 verloren geht oder abgezogen wird.

Es empfiehlt sich, schon vor der Montage der Rohrschelle die Unterlegscheibe 38 daran beweglich, aber unverlierbar anzubringen. Zu diesem Zweck hat der Flansch 20 gegenüberliegende seitliche Aussparungen 44, und die Unterlegscheibe 38 ist seitlich um den Flansch 20 herum, diesen hintergreifend, abgewinkelt, wie dies aus Fig. 3 ersichtlich ist. Sie führt sich somit in radialer Richtung auf dem Flansch 20. Dabei greifen aus Fig. 5 ersichtlich kleine seitliche Nasen 46 in die Aussparungen 44 ein, in die sie vorher eingeschnappt worden sind. Die Anordnung der Nasen 46 an demjenigen Rand der Unterlegscheibe 38, an welchem das Langloch 40 mündet, und die Länge der Aussparungen 44 mit Bezug auf die Lage des Lochs 36 gestatten es, die Unterlegscheibe 38 bei der Montage der Rohrschelle zunächst so weit radial nach außen zurückzuziehen, daß der Schraubenkopf 24 durch das Loch 36 hindurchgeführt werden kann. Danach braucht nur noch die Unterlegscheibe 38 nach radial innen zurückgeschoben werden, um den Rohrschellenverschluß zu verriegeln.

Wie ersichtlich, kommt man bei der Rohrschelle nach Fig. 1 bis 5 mit einer sehr kurzen Spannschraube aus, da diese nur um die Stärke der Unterlegscheibe 38, also nur verhält nismäßig wenig länger sein muß als die Öffnungsweite der Rohrschelle beim Schließvorgang. Die Ausführung eignet sich für Rohrschellen mit zwei oder mehr Öffnungen, von denen eine oder mehrere in der vorstehend beschriebenen Weise ausgebildet und verschlossen werden können.

Bei einem weiteren Ausführungsbeispiel nach Fig. 6 und 7 hat die dort im Längsschnitt und in Draufsicht gezeigte Unterlegscheibe 48 im mittleren Bereich eine Vertiefung 50. Diese ist im Umriß so bemessen, daß sie kleiner ist als das Loch 36 im Flansch 20. Im montierten Zustand wird die Vertiefung 50 durch die Spannschraube 10 teilweise in das Loch 36 hineingedrückt, und dadurch die Unterlegscheibe 48 formschlüssig auf dem Flansch 20 gehalten. Wenn die Vertiefung 50 auch auf der Oberseite der Unterlegscheibe 48 ausgeprägt ist, sollte sie dort im Umriß größer sein als der Schraubenkopf, so daß sich im montierten Zustand die in Fig. 6 gezeigte Anordnung ergibt.

## Patentansprüche

1. Rohrschelle, bestehend aus einem ringförmigen Bügel (12) mit wenigstens einer Öffnung, die durch eine Spannschraube (10) schließbar ist, deren Fuß auf der einen Seite der Öffnung mit Gewindeeingriff gelagert und deren Kopf (24) auf der anderen Seite der Öffnung durch ein Loch (36) in einem am Bügel (12) angebrachten Flansch (20) hindurchführbar und festlegbar ist, **dadurch gekennzeichnet,** daß der Kopf (24) der Spannschraube (10) mit Bezug auf deren Mittellängsachse axial durch das Loch (36) im Flansch (20) hindurchführbar ist und durch eine vor dem Spannen zwischen Kopf (24) und Flansch (20) eingeführte, mit einem am einen Ende offenen Langloch (40) ausgebildete Unterlegscheibe (38) gehalten ist.

2. Rohrschelle nach Anspruch 1, **dadurch gekennzeichnet,** daß die Unterlegscheibe (38) im gespannten Zustand der Schraube (10) formschlüssig durch diese und/oder den Flansch (20) gehalten ist.

3. Rohrschelle nach Anspruch 1, **dadurch gekennzeichnet,** daß die Unterlegscheibe (38) in Richtung des Langlochs (40) verschieblich, aber unverlierbar auf dem Flansch (20) sitzt.

4. Rohrschelle nach Anspruch 2, **dadurch gekennzeichnet,** daß die Unterlegscheibe (48) im mittleren Bereich mit einer Vertiefung (50) ausgebildet ist, welche im Umriß größer ist als der Kopf der Spannschraube (10), aber kleiner als das Loch (36) im Flansch (20).

## Claims

1. A pipe clamp, comprising an annular strap (12) with at least one opening which can be closed by a clamping screw (10), the tip of which is mounted on one side of the opening by thread engagement and the head (24) of which on the other side of the opening can be passed through and located in a hole (36) in a flange (20) attached to the strap (12), characterised in that the head (24) of the clamping screw (10) can be passed axially, relative to its central longitudinal axis, through the hole (36) in the flange (20) and is retained by a washer (38) which is inserted between the head (24) and the flange (20) before tightening takes place and which is formed with a slot (40) open at one end.

2. A pipe clamp according to Claim 1, characterised in that in the tightened condition of the screw (10) the washer (38) is retained in form-locking manner by the screw and/or the flange (20).

3. A pipe clamp according to Claim 1, characterised in that the washer (38) is mounted displaceably in the direction of the slot (40) but captive on the flange (20).

4. A pipe clamp according to Claim 2, characterised in that in its central region the washer (48) is provided with a recess (50) which in outline is larger than the head of the clamping screw (10) but smaller than the hole (36) in the flange (20).

## Revendications

1. Collier de serrage formé d'un étrier annulaire (12) avec au moins une ouverture, ce collier se fermant à l'aide d'une vis de serrage (10) dont l'extrémité est prévue du côté de l'ouverture muni du filetage et dont la tête (24) traverse de l'autre côté de l'ouverture, un trou (36) d'une patte (20) de l'étrier (12) pour se fixer, collier caractérisé en ce que la tête (24) de la vis de serrage (10) traverse le trou (36) de la bride (20) axialement par rapport à l'axe longitudinal médian et est maintenue par une rondelle (38) à trous oblongs (40) ouverts à une extrémité, cette rondelle étant mise en place entre la tête (24) et la patte (20) avant le serrage.

2. Collier de serrage selon la revendication 1, caractérisé en ce que la rondelle (38) est maintenue par une liaison par la forme, lorsque la vis (10) est à l'état serré, par la vis et/ou la patte (20).

3. Collier de serrage selon la revendication 1, caractérisé en ce que la rondelle (38) est montée coulissante dans la direction du trou oblong (40) mais est reliée de manière non détachable à la patte (20).

4. Collier de serrage selon la revendication 2, caractérisé en ce que la rondelle (48) comporte dans sa zone médiane, une cavité (50) dont le contour est supérieur à celui de la tête de la vis de serrage (10) mais inférieur à celui du trou (36) de la patte (20).

Fig.1

Fig.2

Fig.3

36  20

42

38

38

24

10

34

12

Fig.4  44  20

38

42

40

Fig.5

12  36

46

Fig.7

Fig.6  48

10  50  20

48  50